# EUROPEAN PATENT APPLICATION

(11) **EP 4 328 130 A1**
(43) Date of publication of application: **28.02.2024**
(21) Application number: 23192975.3
(22) Date of filing: 23.08.2023
(51) Int. Cl.: B64C 3/18, B33Y 10/00, B64C 3/22, B64D 41/00, B64D 45/00, B64U 50/34, F16F 7/00, H02N 2/18, B64C 1/00

(54) **AIRCRAFT ARRANGEMENT**

(30) Priority: 26.08.2022 GB 202212425
(71) Applicant: Airbus Operations Limited, Bristol BS34 7PA (GB); Imperial College Innovations Limited, London SW7 2AZ (GB)
(72) Inventor: MUIR, Martin, Bristol, BS34 7PA (GB); HEWSON, Robert W, Barby, CV23 8UE (GB); SANTER, Matthew, Exeter, EX4 6LJ (GB); NIGHTINGALE, Morgan D, Abergele, LL22 9AY (GB)
(74) Representative: Abel & Imray LLP

(57) **Abstract**

An aircraft arrangement (1) is provided, the aircraft arrangement comprising a first aircraft component (2) for converting at least one input vibration into an output vibration suitable for driving an energy harvester (3), and an energy harvester (3) coupled to the first aircraft component (2) and configured to generate electrical energy in response to the output vibration of the first aircraft component (3), the first aircraft component (3) comprising a three-dimensional lattice structure (4) comprising a multiplicity of unit cells, the unit cells comprising multiple lattice-forming members, the unit cells having a mean greatest dimension of at least 10nm.

## Description

### BACKGROUND OF THE INVENTION

The present disclosure relates to energy harvesting in an aircraft.

The present invention concerns energy harvesting in an aircraft. More particularly, but not exclusively, this invention relates to an aircraft arrangement. This invention also relates to an aircraft component suitable for use in an aircraft arrangement, a method of generating electrical power in an aircraft from a vibration, a method of sensing for the presence of a non-standard operating condition in an aircraft, a method of designing an aircraft component and a method of making an aircraft component.

It is well-known that certain aircraft components vibrate during use of the aircraft. Such vibrations can have deleterious effects on the performance of the aircraft and can adversely affect a passenger's flight experience. It is known to try to reduce the affects of such vibrations, for example, using dampers. It has also been proposed to use lattice-based structures to produce aircraft components whose response to such aircraft vibrations has been improved ("Multiscale optimisation of resonant frequencies for lattice-based additive manufactured structures", M. Nightingale et al., Structural and Multidisciplinary Optimization, 2021, 63:1187-1201, hereinafter Nightingale *et al.*)*.*

The present invention seeks to provide an improved aircraft arrangement in which lattice-based structures (such as those described by Nightingale et al.) are used to drive an energy harvester.

### SUMMARY OF THE INVENTION

The present invention provides, in accordance with a first aspect, an aircraft arrangement comprising a first aircraft component for converting at least one input vibration into an output vibration suitable for driving an energy harvester, and an energy harvester coupled to the first aircraft component and configured to generate electrical energy in response to the output vibration of the first aircraft component, the first aircraft component comprising a three-dimensional lattice structure comprising a multiplicity of unit cells , the unit cells comprising at least one (and optionally multiple) lattice-forming member, the unit cells having a mean greatest dimension of at least 10nm.

The Applicants have discovered that it is possible to drive an energy harvester using the vibrations of an aircraft component that comprises a lattice structure of the type described above. The Applicants have discovered that it is possible to change the lattice structure and its distribution within the first aircraft component to alter the way in which the energy harvester is driven. The energy harvester may comprise a piezoelectric component. For example, the energy harvester may comprise a piezoelectric microelectromechanical (MEMS) device.

The unit cells may have a mean greatest dimension of at least 20nm, optionally at least 50nm, optionally at least 100nm, optionally at least 200nm, optionally at least 500nm, optionally at least 1 micron, optionally at least 2microns, optionally at least 5 microns, optionally at least 10microns, optionally at least 0.02mm, optionally at least 0.03mm, optionally at least 0.05mm, optionally at least 0.08mm, optionally at least 0.10mm, optionally at least 0.15mm, optionally at least 0.20mm, optionally at least 0.30mm, optionally at least 0.50mm, optionally at least 1.0mm.

The unit cells may have a mean greatest dimension of no more than 500mm, optionally no more than 400mm, optionally no more than 300mm, optionally no more than 200mm, optionally no more than 100mm, optionally no more than 75mm, optionally no more than 50mm, optionally no more than 25mm, optionally no more than 20mm, optionally no more than 15mm, optionally no more than 12mm, optionally no more than 10mm, optionally no more than 8mm, and optionally no more than 5mm.

The unit cells may have a mean greatest dimension of from 20nm to 500mm, optionally of from 100nm to 200mm, optionally of from 0.1mm to 100mm and optionally of from 0.5mm to 50mm.

The mean greatest dimension of the unit cells may depend on the size of the first aircraft component. For example, the means greatest dimension of the unit cells may be 0.001 to 0.1, and optionally 0.001 to 0.01, of the greatest dimension of the first aircraft component.

The first aircraft component may comprise one or more lattice structure portions formed from said unit cells, and one or more non-lattice portions, said non-lattice portions not being formed from said unit cells. The one or more non-lattice portions may be formed from conventional aircraft component materials. The total volume of the one or more non-lattice portions may be less than, or more than, the total volume of the one or more lattice structure portions. The total volume of the one or more non-lattice portions may be no more than 200% of the total volume of the one or more lattice structure portions, optionally no more than 180%, optionally no more than 160%, optionally no more than 140%, optionally no more than 120%, optionally no more than 100%, optionally no more than 80%, optionally no more than 60%, optionally no more than 40%, optionally no more than 20% and optionally no more than 10% of the volume of the one or more lattice structure portions. The total volume of the one or more non-lattice portions may be at least 1% of the volume of the one or more lattice structure portions, optionally at least 2%, optionally at least 5%, optionally at least 10%, optionally at least 15%, optionally at least 20%, optionally at least 25%, optionally at least 30% and optionally at least 50% of the volume of the one or more lattice structure portions.

Optionally at least 30%, optionally at least 40%, optionally at least 50%, optionally at least 60%, optionally at least 70%, optionally at least 75%, optionally at least 80%, optionally at least 85%, optionally at least 90%, optionally at least 95%, optionally at least 97%, optionally at least 99% and optionally at least 99.5% of the unit cells have the same shape and/or size and/or number of lattice-forming members, optionally the same shape and size (but not the same number of lattice-forming members), and optionally the same shape, size and number of lattice-forming members. In this context, shape refers to the structure of the unit cell, which could be, for example, cubic, tetragonal, orthorhombic, monoclinic, hexagonal, rhombohedral or triclinic. Also, the orientation of respective lattice-forming members may be the same (for example, to within an angle of 10 degrees, optionally to within an angle of 5 degrees and optionally to within an angle of 2 degrees) for at least 30%, optionally at least 40%, optionally at least 50%, optionally at least 60%, optionally at least 70%, optionally at least 75%, optionally at least 80%, optionally at least 85%, optionally at least 90%, optionally at least 95%, optionally at least 97%, optionally at least 99% and optionally at least 99.5% of the unit cells. In this connection, a unit cell may, for example, comprise first, second and third lattice-forming members, each having an orientation within the unit cell. The first lattice-forming member in one unit cell may have the same orientation as the first lattice-forming member in another unit cell. Similarly, the second lattice-forming member in one unit cell may have the same orientation as the second lattice-forming member in another unit cell, and the third lattice-forming member in one unit cell may have the same orientation as the third lattice-forming member in another unit cell.

As foreshadowed above, not all of the unit cells will have the same number of lattice members. For example, a pair of adjacent unit cells may comprise different numbers of lattice members.

The mean number of lattice-forming members per unit cell may be at least 2, optionally at least 3, optionally at least 4, optionally at least 5, optionally at least 6 and optionally at least 7 lattice-forming members.

The mean number of lattice-forming members per unit cell may be no more than 20, optionally no more than 18, optionally no more than 16, optionally no more than 14, optionally no more than 12, and optionally no more than 10 lattice-forming members.

Optionally at least 30%, optionally at least 40%, optionally at least 50%, optionally at least 60%, optionally at least 70%, optionally at least 75%, optionally at least 80%, optionally at least 85% and optionally at least 90% of the unit cells comprise at least 2, optionally at least 3, optionally at least 4, optionally at least 5, optionally at least 6 and optionally at least 7 lattice-forming members.

Optionally at least 30%, optionally at least 40%, optionally at least 50%, optionally at least 60%, optionally at least 70%, optionally at least 75%, optionally at least 80%, optionally at least 85% and optionally at least 90% of the unit cells comprise no more than 20, optionally no more than 18, optionally no more than 16, optionally no more than 14, optionally no more than 12, and optionally no more than 10 lattice-forming members.

Within a unit cell, a lattice-forming member may extend between two corners of a unit cell (optionally opposed corners), optionally between a corner of a unit cell and a face, and optionally between two faces of a unit cell (optionally two opposed faces). A unit cell may comprise at least one lattice-forming member extending between two faces of a unit cell and at least one lattice-forming member extending between two corners of a unit cell. A unit cell may comprise a plurality of lattice-forming members extending between faces of a unit cell, and a plurality of lattice-forming members extending between corners of a unit cell. Optionally, a first lattice-forming member extends between a first pair of faces of a unit cell, a second lattice-forming member extends between a second pair of faces of the unit cell, a third lattice-forming member extends between a first pair of corners of the unit cell and a fourth lattice-forming member extends between a second pair of corners of the unit cell. Each face and/or each corner of a unit cell may be provided with lattice-forming member. For example, in a cubic unit cell, which comprises six faces and eight corners, four lattice-forming members extend between four pairs of corners, and three lattice-forming members extend between three pairs of faces.

As mentioned above, the first aircraft component may comprise one or more lattice structure portions of a component formed from said unit cells, and one or more non-lattice portions, said non-lattice portions not being formed from said unit cells. Optionally, in at least two of the lattice structure portions, optionally in a majority of the at least two lattice structure portions and optionally in each of the lattice structure portions, the unit cells are the same size and/or the same shape, and/or have the same number of lattice-forming members, and/or the respective lattice-forming members have the same orientation. Optionally, in at least two of the lattice structure portions, optionally in a majority of the at least two lattice structure portions and optionally in each of the lattice structure portions, the unit cells are substantially the same size, the same shape, and have the same number of lattice-forming members. Optionally, respective lattice-forming members have the same orientation.

Optionally, the arrangement of the plurality of lattice forming members within at least 30%, optionally at least 40%, optionally at least 50%, optionally at least 60%, optionally at least 70%, optionally at least 75%, optionally at least 80%, optionally at least 85%, optionally at least 90%, optionally at least 95%, optionally at least 97%, optionally at least 99% and optionally at least 99.5% of the unit cells may be the same. For example, in a cubic unit cell, which comprises six faces and eight corners, the lattice forming members may be arranged thus: four lattice-forming members extending between four pairs of corners, and three lattice-forming members extending between three pairs of faces. The size of the lattice forming members need not be the same, and may vary within a unit cell, and between unit cells.

Optionally, within at least one lattice structure portion, the total volume of the lattice forming members within a unit cell may be substantially the same for at least 30%, optionally at least 40%, optionally at least 50%, optionally at least 60%, optionally at least 70%, optionally at least 75%, optionally at least 80%, optionally at least 90%, optionally at least 95%, optionally at least 97% and optionally at least 99% of the unit cells within the lattice structure portion. Optionally, within more than one and optionally within each lattice structure portion, the total volume of the lattice forming members within a unit cell may be substantially the same for at least 30%, optionally at least 40%, optionally at least 50%, optionally at least 60%, optionally at least 70%, optionally at least 75%, optionally at least 80%, optionally at least 90%, optionally at least 95%, optionally at least 97% and optionally at least 99% of the unit cells within the lattice structure portion. For example, the first aircraft component may comprise a first lattice structure portion and a second lattice structure portion, the total volume of the lattice-forming members within a unit cell in the first lattice structure portion may be substantially the same for at least 30%, optionally at least 40%, optionally at least 50%, optionally at least 60%, optionally at least 70%, optionally at least 75%, optionally at least 80%, optionally at least 90%, optionally at least 95%, optionally at least 97% and optionally at least 99% of the unit cells within the first lattice structure portion. The total volume of the lattice-forming members within a unit cell in the second lattice structure portion may be substantially the same for at least 30%, optionally at least 40%, optionally at least 50%, optionally at least 60%, optionally at least 70%, optionally at least 75%, optionally at least 80%, optionally at least 90%, optionally at least 95%, optionally at least 97% and optionally at least 99% of the unit cells within the second lattice structure portion. The total volume of the lattice forming members within a unit cell in the second lattice structure portion need not be the same as the total volume of the lattice forming members within a unit cell in the first lattice structure portion.

The arrangement of the lattice-forming members within a unit cell in a first lattice structure portion may be substantially the same for at least 30%, optionally at least 40%, optionally at least 50%, optionally at least 60%, optionally at least 70%, optionally at least 75%, optionally at least 80%, optionally at least 90%, optionally at least 95%, optionally at least 97% and optionally at least 99% of the unit cells within the first lattice structure portion. For example, a unit cell in a first lattice portion may comprise n lattice-forming members, 1^{st} to nth, the 1^{st} to nth lattice-forming members being arranged in a particular manner in the unit cell, and each of the 1^{st} to nth lattice-forming members having an orientation within the unit cell, and each having a volume, the volume of the respective 1^{st} to nth lattice forming members being the same in at least 30%, optionally at least 40%, optionally at least 50%, optionally at least 60%, optionally at least 70%, optionally at least 75%, optionally at least 80%, optionally at least 90%, optionally at least 95%, optionally at least 97% and optionally at least 99% of the other unit cells within the first lattice structure portion. For example, a cubic unit cell in a first lattice portion may comprise three lattice-forming members, each extending between a pair of faces of the cube of the unit cell. A first lattice-forming member may extend between a first pair of faces, a second lattice-forming member may extend between a second pair of faces and a third lattice-forming member may extend between a third pair of faces. The volume of the first lattice-forming member may be the same in at least 30%, optionally at least 40%, optionally at least 50%, optionally at least 60%, optionally at least 70%, optionally at least 75%, optionally at least 80%, optionally at least 90% of the unit cells of the first lattice structure portion. The volume of the second lattice-forming member may be the same in at least 30%, optionally at least 40%, optionally at least 50%, optionally at least 60%, optionally at least 70%, optionally at least 75%, optionally at least 80%, optionally at least 90% of the unit cells of the first lattice structure portion. The volume of the third lattice-forming member may be the same in at least 30%, optionally at least 40%, optionally at least 50%, optionally at least 60%, optionally at least 70%, optionally at least 75%, optionally at least 80%, optionally at least 90% of the unit cells of the first lattice structure portion. The volume of the first, second and third lattice-forming members need not be the same as each other.

The arrangement of the lattice-forming members within a unit cell in a second lattice structure portion may be substantially the same for at least 30%, optionally at least 40%, optionally at least 50%, optionally at least 60%, optionally at least 70%, optionally at least 75%, optionally at least 80%, optionally at least 90%, optionally at least 95%, optionally at least 97% and optionally at least 99% of the unit cells within the second lattice structure portion. For example, a unit cell in a second lattice portion may comprise n lattice-forming members, 1^{st} to nth, the 1^{st} to nth lattice-forming members being arranged in a particular manner in the unit cell, and each of the 1^{st} to nth lattice-forming members having an orientation within the unit cell, and each having a volume, the volume of the respective 1^{st} to nth lattice-forming members being the same in at least 30%, optionally at least 40%, optionally at least 50%, optionally at least 60%, optionally at least 70%, optionally at least 75%, optionally at least 80%, optionally at least 90%, optionally at least 95%, optionally at least 97% and optionally at least 99% of the other unit cells within the second lattice structure portion. For example, a cubic unit cell in a second lattice portion may comprise three lattice-forming members, each extending between a pair of faces of the cube of the unit cell. A first lattice-forming member may extend between a first pair of faces, a second lattice-forming member may extend between a second pair of faces and a third lattice-forming member may extend between a third pair of faces. The volume of the first lattice-forming member may be the same in at least 30%, optionally at least 40%, optionally at least 50%, optionally at least 60%, optionally at least 70%, optionally at least 75%, optionally at least 80%, optionally at least 90% of the unit cells of the first lattice structure portion. The volume of the second lattice-forming member may be the same in at least 30%, optionally at least 40%, optionally at least 50%, optionally at least 60%, optionally at least 70%, optionally at least 75%, optionally at least 80%, optionally at least 90% of the unit cells of the first lattice structure portion. The volume of the third lattice-forming member may be the same in at least 30%, optionally at least 40%, optionally at least 50%, optionally at least 60%, optionally at least 70%, optionally at least 75%, optionally at least 80%, optionally at least 90% of the unit cells of the first lattice structure portion. The volume of the first, second and third lattice-forming members need not be the same as each other.

The arrangement of the lattice forming members in the first lattice structure portion may be the same as in the second lattice structure portion for at least 30%, optionally at least 40%, optionally at least 50%, optionally at least 60%, optionally at least 70%, optionally at least 75%, optionally at least 80%, optionally at least 90% of the unit cells in the first lattice structure portion and at least 30%, optionally at least 40%, optionally at least 50%, optionally at least 60%, optionally at least 70%, optionally at least 75%, optionally at least 80%, optionally at least 90% of the unit cells in the second lattice structure portion. For example, at least 30%, optionally at least 40%, optionally at least 50%, optionally at least 60%, optionally at least 70%, optionally at least 75%, optionally at least 80%, optionally at least 90% of the unit cells in the first lattice structure portion and at least 30%, optionally at least 40%, optionally at least 50%, optionally at least 60%, optionally at least 70%, optionally at least 75%, optionally at least 80%, optionally at least 90% of the unit cells in the second lattice structure portion may comprise n lattice-forming members, the 1^{st} to nth lattice-forming members being arranged in a particular manner in the unit cell, each of the 1^{st} to nth lattice-forming members having an orientation within the unit cell which is the same as the orientation of respective 1^{st} to nth lattice-forming members in other unit cells.

In any one particular lattice structure portion, optionally at least 30%, optionally at least 40%, optionally at least 50%, optionally at least 60%, optionally at least 70%, optionally at least 75%, optionally at least 80%, optionally at least 85%, optionally at least 90%, optionally at least 95%, optionally at least 97%, optionally at least 99% and optionally at least 99.5% of the unit cells may have the same shape and/or size, and/or the same number of lattice forming members, optionally the same shape and size (but not the same number of lattice-forming members), and optionally the same shape and size of unit cell, and the same number of lattice forming members.

References above are made to the word "same". For the avoidance of doubt, "the same" refers to dimensions that are optionally within 5% of the mean of said dimensions, optionally within 3% of the mean, optionally within 2% of the mean and optionally within 1% of the mean of said dimensions.

At least some of, optionally most of, and substantially all of the unit cells may be cubic, tetragonal, orthorhombic, monoclinic, hexagonal, rhombohedral or triclinic.

Optionally at least 30%, optionally at least 40%, optionally at least 50%, optionally at least 60%, optionally at least 70%, optionally at least 75%, optionally at least 80%, optionally at least 75%, optionally at least 80%, optionally at least 85%, optionally at least 90%, optionally at least 95%, optionally at least 97%, optionally at least 99% and optionally at least 99.5% of the unit cells have a fill factor, defined as the ratio of the volume of the lattice-forming members to the volume of the unit cell of at least 0.05, optionally at least 0.10, optionally at least 0.15 and optionally at least 0.20.

Optionally, 30%, optionally at least 40%, optionally at least 50%, optionally at least 60%, optionally at least 70%, optionally at least 75%, optionally at least 80%, optionally at least 75%, optionally at least 80%, optionally at least 85%, optionally at least 90%, optionally at least 95%, optionally at least 97%, optionally at least 99% and optionally at least 99.5% of the unit cells have a fill factor, defined as the ratio of the volume of the lattice-forming members to the volume of the unit cell of no more than 0.70, optionally no more than 0.65, optionally no more than 0.60, optionally no more than 0.55 and optionally no more than 0.50.

Optionally, the mean fill factor of the unit cells is at least 0.20, optionally at least 0.25 and optionally at least 0.30.

Optionally, the mean fill factor of the unit cells is no more than 0.60, optionally no more than 0.55 and optionally no more than 0.50.

The three-dimensional lattice structure may be produced by additive manufacturing. Additive manufacturing (also known as 3D printing) refers to techniques in which layers of material are typically added to build-up a structure. Additive manufacturing does not refer to techniques in which material is removed from a monolithic structure. Additive manufacturing may comprise deposition of plastics material or may involve deposition of metal material that is subsequently treated (e.g. heated).

As mentioned above, the first aircraft component may comprise one or more lattice structure portions of component formed from said unit cells, and one or more non-lattice portions, said other portions not being formed from said unit cells. At least one lattice structure portion may be adjacent to, and optionally abut, another lattice structure portion. At least one lattice structure portion may be adjacent to, and optionally abut, at least one of said non-lattice portions. At least one lattice structure portion may be coupled by a coupling portion to a non-lattice portion to facilitate transmission of vibrations from the other portion to the lattice structure portion. The coupling portion may comprise one or more leg portions extending from the other portion to the lattice structure portion.

At least one lattice structure portion may be substantially cuboid in shape.

The first aircraft component may therefore comprise a component main body coupled to one or more lattice structure portions to facilitate transmission of vibrations from the component main body to the one or more lattice structure portion. The component main body may be devoid of lattice structure portions. At least one lattice structure portion may be coupled by a coupling portion to the component main body to facilitate transmission of vibrations from the component main body to the lattice structure portion. The coupling portion may comprise one or more leg portions extending from the component main body to the lattice structure portion.

The energy harvester reacts to mechanical vibrations of the first aircraft component to generate electrical energy. Such vibrations may be caused by interaction of the aircraft with its environment, for example, movement of air across and/or around the aircraft. For example, movement of air across and/or around an aircraft wing may cause the wing to vibrate. Such vibrations may be caused by the aircraft itself. For example, in a rotary-wing aircraft such as a helicopter vibrations of the engine, gearbox and/or rotors may cause the first aircraft component to vibrate.

The first aircraft component may be configured so that the first aircraft component vibrates in a suitable manner to drive the energy harvester, particularly when the aircraft component is subjected to certain input vibrations. For example, if it is known that the aircraft component will be subject to certain vibrations having certain characteristics (for example, in terms of frequency and amplitude), it is possible to configure the first aircraft component so that it vibrates in a desired manner in response to those input vibrations to which the first aircraft component is subjected.

The aircraft component may, for example, comprise a wing rib. The wing rib may extend from a front rib portion to a rear rib portion. The wing rib may comprise a wing rib main body coupled to one or more lattice structure portions of component formed from said unit cells to facilitate transmission of vibrations from the rib main body to the lattice structure portion. The wing rib main body may be coupled to the one or more lattice structure portions by a coupling portion to a non-lattice portion to facilitate transmission of vibrations from the rib main body to the lattice structure portion. The coupling portion may comprise one or more leg portions extending from the rib main body to the lattice structure portion, optionally a first plurality of upper leg portions and optionally a second plurality of lower leg portions. The coupling portion may comprise a supporting portion, optionally in the form of a plate, extending between the rib main body and the lattice structure portion. At least one lattice structure portion may be located forward or rearward of the rib main body. At least one lattice structure portion may be substantially cuboid in shape. At least one lattice structure portion may be arranged so that an edge of the cuboid is approximately normal to a line of flight of the aircraft.

At least two, and optionally more than two lattice structure portions, may be arranged symmetrically with respect to the first aircraft component. The at least two lattice structure portions may be arranged symmetrically about an axis of the first aircraft component, for example, a longitudinal axis of the aircraft component. For example, the at least two lattice structure portions may comprise unit cells having substantially the same shape, size, number of lattice forming members, and arrangement of lattice forming members. Respective lattice forming members in the unit cells of the at least two lattice structure portions may be the same size.

The aircraft arrangement may comprise a second aircraft component being capable of generating the at least one input vibration, and being coupled to the first aircraft component so that vibration of the second aircraft component generates the at least one input vibration in the first aircraft component.

The energy harvester may be electrically coupled to an electrical load, and configured to provide electrical energy to said electrical load. The aircraft arrangement of the present invention is particularly beneficial in that it may use aircraft vibrations to generate electrical energy for powering auxiliary electrical loads that are not powered by the conventional sources of power in the aircraft. In this connection, if it is intended to use conventional sources of electrical power in an aircraft to power additional, new electrical loads, then significant resource in terms of time, effort and money may be required to ensure that electrical power may be provided safely without jeopardising power to other aircraft systems. By using an independent source of electrical power, in this case the energy harvester, it is possible to provide electrical power to newly-added electrical loads without disturbing the existing, conventional electrical power systems.

The energy harvester may be arranged to provide electrical energy to a store of electrical energy, such as a battery or cell. The battery or cell may be coupled to an electrical load.

The at least one input vibration may be present or absent in the event of a non-standard operating condition, and therefore the aircraft arrangement may be configured to indicate the presence or absence of a non-standard operating condition in the aircraft. For example, the absence of the at least one input vibration may be indicative of a non-standard operating condition. For example, the at least one input vibration may be associated with a standard operating condition, such as the normal functioning of an engine. The absence of the input vibration may therefore be indicative of the non-functioning of the engine. Alternatively, the input vibration may be present in the event of a non-standard operating condition. For example, the at least one input vibration may be associated with mass imbalance in the aircraft. The presence of the input vibration may therefore be indicative of mass imbalance in the aircraft.

The energy harvester may be in communication with an indicator for indicating a non-standard operating condition. The indicator may be operable between a first indicator condition indicative of a standard operating condition (e.g. a visual indicator being off or less visible, or optionally a visual indicator being on) and a second indictor condition indicative of a non-standard operating condition (e.g. a visual indicator being on or more visible, or optionally a visual indicator being off or less visible). The indicator may be of any suitable type, such as a visual indicator, such as a light, or an aural indicator, such as a horn or beeper.

According to a second aspect of the invention there is also provided a first aircraft component suitable for use in the aircraft arrangement of the first aspect of the present invention. The first aircraft component may have the features described above in relation to the aircraft arrangement of the first aspect of the present invention.

According to a third aspect of the present invention there is provided a method of generating electrical power in an aircraft from a vibration, the method comprising:
providing an aircraft component comprising a three-dimensional lattice structure comprising a multiplicity of unit cells, the unit cells comprising at least one (and optionally multiple) lattice-forming member, the unit cells having a mean greatest dimension of at least 10nm;
causing vibrations to be generated in the aircraft, thereby causing the aircraft component to vibrate in a pre-determined manner, the pre-determined vibrations driving an energy harvester, the energy harvester generating electrical power.

The three-dimensional lattice structure may comprise those features described above in relation to the aircraft arrangement of the first aspect of the present invention. The aircraft component may comprise those features of the first aircraft component described above in relation to the aircraft arrangement of the first aspect of the present invention.

Causing vibrations in the aircraft may comprise operating the aircraft.

The method of the third aspect of the present invention may use the aircraft arrangement of the first aspect of the present invention.

The energy harvester may be coupled to an electrical load, and configured to provide electrical energy to said electrical load.

The energy harvester may be arranged to provide electrical energy to a store of electrical energy, such as a battery or cell. The battery or cell may be coupled to an electrical load.

The method may comprise use of an aircraft arrangement in accordance with the first aspect of the present invention.

According to a fourth aspect of the present invention, there is provided a method of sensing for the presence of a non-standard operating condition in an aircraft, the method comprising:
providing an aircraft component configured to be subjected to indicative vibrations having one or more characteristics, if the indicative vibrations are present, those indicative vibrations being present or absent in the event of the non-standard operating condition, the aircraft component comprising a three-dimensional lattice structure comprising a multiplicity of unit cells, the unit cells comprising at least one (and optionally multiple) lattice-forming member, the unit cells having a mean greatest dimension of at least 10nm;
in the presence of indicative vibrations, the aircraft component vibrates in a first pre-determined manner in accordance with one or more vibrational characteristics, causing an energy harvester to generate electrical energy in a first electrical energy generating mode that is indicative of the presence or absence of the non-standard operating condition; and
in the absence of indicative vibrations, the aircraft component either does not vibrate or vibrates differently from the first pre-determined manner, causing an energy harvester to either not vibrate or to generate electrical energy in a second electrical energy generating mode that is indicative of the presence or absence of the non-standard operating condition.

The Applicant has discovered that it is possible to detect a non-standard operating condition of an aircraft using an aircraft component comprising a defined lattice structure and an energy harvester. The aircraft component may be configured to vibrate in a pre-determined manner in response to a known input vibration (referred to above as "indicative vibration"), and to drive the energy harvester. For example, the indicative vibration may be present in the event that the aircraft is in a standard operating condition i.e. the non-standard operating condition is absent. The absence of the indicative vibration would be associated with a non-standard operating condition. For example, if the indicative vibration is generated by an engine operating in a normal manner, then the aircraft component will vibrate accordingly, driving the energy harvester, and causing the energy harvester to generate electrical power, indicative of a standard operating condition of the aircraft. If the indicative vibration ceased, then the aircraft component would not vibrate, or would vibrate with lower amplitude, causing a reduction in the driving of the energy harvester, and a reduction in the electrical power generated by the energy harvester. This reduction in electrical power would be indicative of engine failure, a non-standard operating condition.

The indicative vibration may be absent in the event that the aircraft is in a standard operating condition and may be present in the event that the aircraft is in a non-standard operating condition. For example, if the indicative vibration is associated with mass imbalance in the aircraft (a non-standard operating condition of the aircraft), then the indicative vibration is present in the event that the aircraft is in a non-standard operating condition. If there is no mass imbalance, then there will be no such indicative vibration.

The aircraft component may have the features of the first aircraft component as described above in relation to the aircraft arrangement of the first aspect of the present invention.

The method of the fourth aspect of the present invention may be performed using the aircraft arrangement of the first aspect of the present invention.

According to a fifth aspect of the present invention, there is provided a method of designing a first aircraft component for converting at least one input vibration into an output vibration for driving an energy harvester, the first aircraft component comprising a three-dimensional lattice structure comprising a multiplicity of unit cells, the unit cells comprising at least one (and optionally multiple) lattice-forming member, the unit cells having a mean greatest dimension of at least 10nm, the method comprising:
determining one or more desired output vibrational characteristics of the first aircraft component for driving the energy harvester;
determining one or more input vibrational characteristics of the first aircraft component;
based on the one or more desired output vibrational characteristics and the one or more input vibrational characteristics, defining the structure of the first aircraft component in relation to one of more of: the number of unit cells, the size of the unit cells, the number of lattice-forming members within unit cells, the size of lattice-forming members within unit cells, the arrangement of lattice-forming members within unit cells, and the distribution of the unit cells within the first aircraft component.
determining one or more output vibrational characteristics based on the one or more input vibrational characteristics for the defined structure of the first aircraft component, and comparing the one or more output vibrational characteristics with the one or more desired output vibrational characteristics; and
based on said comparison, altering one or more of the number of unit cells, the size of the unit cells, the number of lattice-forming members within unit cells, the size of lattice-forming members within unit cells, the arrangement of lattice-forming members within unit cells, and the distribution of the unit cells within the first aircraft component.

The Applicant has discovered that it is possible to tailor the structure of an aircraft component so that in response to a known input vibration, the aircraft component produces a desired output vibrational characteristic for driving an energy harvester.

Determining one or more desired output vibrational characteristics of the first aircraft component for driving the energy harvester may comprise selecting one or both of a frequency and amplitude of vibration suitable for driving the energy harvester. The selection of one or both of the frequency and amplitude of vibration may have regard to the type of energy harvester that would be used with the first aircraft component.

Determining one or more input vibrational characteristics of the first aircraft component may comprise determining at least one frequency and/or at least one amplitude of vibration to which the aircraft component may be subjected in use. Determining one or more input vibrational characteristics of the first aircraft component may comprise determining a plurality of frequencies and/or a plurality of amplitudes of vibration to which the first aircraft component may be subjected in use. For example, the first aircraft component may be subjected to a plurality of vibrational inputs, each comprising at least one amplitude and at least one frequency of vibration. Determining one or more input vibrational characteristics of the first aircraft component may comprise determining one or more vibrational characteristics of a second aircraft component to which the first aircraft component is to be coupled.

Defining the structure of the first aircraft component may optionally comprise defining a three-dimensional lattice structure, wherein at least 30%, optionally at least 40%, optionally at least 50%, optionally at least 60%, optionally at least 70%, optionally at least 75%, optionally at least 80%, optionally at least 90%, optionally at least 95%, optionally at least 98%, optionally at least 99% and optionally at least 99.5% of the unit cells have one or more of the following: the same size, same shape and the same number of lattice-forming members. If unit cells have the same shape, then optionally the orientation of respective lattice-forming members is the same in each unit cell. The applicant has discovered that it is generally beneficial if the three-dimensional lattice structure is formed from unit cells that have the same shape, size and the same number of lattice-forming members, with the orientation of respective lattice-forming members being the same in each unit cell.

Defining the structure of the first aircraft component may comprise defining the shape of the first aircraft component so as to be able to replace an existing aircraft component.

Defining the structure of the first aircraft component may comprise having regard to the anchoring or attachment of the first aircraft component to the aircraft. For example, the manner in which an aircraft component is attached to the aircraft may affect the vibrational modes of the aircraft component. For example, if the first aircraft component comprises a cuboid that is attached to the aircraft at the smallest face of the cuboid, then the first aircraft component may exhibit two bending modes and a torsional mode.

Defining the structure of the first aircraft component may comprise defining regions with a high mass. For example, if it is believed that it would be advantageous to have regions of the first aircraft component with a high mass, the structure of the unit cells in that region would reflect this, with a high fill factor (the proportion of the unit cell made-up of lattice-forming material), for example, with a mean fill factor of at least 0.50, at least 0.55 and optionally at least 0.60.

Conversely, the structure of the first aircraft component may comprise defining regions with a low mass. For example, if it is believed that it would be advantageous to have regions of the first aircraft component with a low mass, the structure of the unit cells in that region would reflect this, with a low fill factor (the proportion of the unit cell made-up of lattice-forming material), for example, with a mean fill factor of at no more than 0.30, optionally no more than 0.25 and optionally no more than 0.20.

Determining one or more output vibrational characteristics based on the one or more input vibrational characteristics for the defined structure of the first aircraft component may comprise computational methods, such as finite method analysis.

Comparing the one or more output vibrational characteristics with the one or more desired output vibrational characteristics may comprise determining whether or not the output vibrational characteristics are within desired limits of the one or more desired output vibrational characteristics. If not, then the method may comprise altering one or more of the number of unit cells, the size of the unit cells, the number of lattice-forming members within unit cells, the size of lattice-forming members within unit cells, the arrangement of lattice-forming members within unit cells, and the distribution of the unit cells within the first aircraft component.

The first aircraft component may comprise one or more features of the aircraft component as described above in relation to the aircraft arrangement of the first aspect of the present invention. The first aircraft component may be the first aircraft component described above in relation to the aircraft arrangement of the first aspect of the present invention.

According to a sixth aspect of the present invention, there is provided a method of making a first aircraft component for converting at least one input vibration into an output vibration for driving an energy harvester, the first aircraft component comprising a three-dimensional lattice structure comprising a multiplicity of unit cells comprising at least one (and optionally multiple) lattice-forming member, the unit cells having a mean greatest dimension of at least 10nm, the method of producing a first aircraft component comprising a method of designing a first aircraft component in accordance with the fifth aspect of the present invention, and producing a first aircraft component to the design generated by the method of designing a first aircraft component in accordance with the fifth aspect of the invention.

The first aircraft component may be produced by additive manufacturing, optionally in conjunction with other techniques. In particular, the three-dimensional lattice structure may be produced by additive manufacturing. Additive manufacturing (also known as 3D printing) refers to techniques in which layers of material are typically added to build-up a structure. Additive manufacturing does not refer to techniques in which material is removed from a monolithic structure. Additive manufacturing may comprise deposition of plastics material or may involve deposition of metal material that is subsequently treated (e.g. heated).

The method may comprise forming one or more lattice structure portions comprising a three-dimensional lattice structure comprising a multiplicity of unit cells comprising at least one (and optionally multiple) lattice-forming member, the unit cells having a mean greatest dimension of at least 10nm. If the first aircraft component comprises more than one lattice structure portions, then method may comprise manufacturing the lattice structure portions separately and assembling the first aircraft component from the lattice structure portions. Alternatively, the lattice structure portions may be made in situ as part of the first aircraft component.

As mentioned in relation to the first aircraft component of the first aspect of the present invention, the aircraft component may comprise a non-lattice portion that does not comprise the three-dimensional lattice structure described above. The method may therefore comprise forming the non-lattice portion and forming one or more lattice portions. The formation of the non-lattice portion and one or more lattice portions may be sequential. For example, the non-lattice portion may be formed, and then the one or more lattice portions may be formed on the non-lattice portion. Alternatively, the method may comprise forming the non-lattice portion and at least one lattice portion, and assembling the non-lattice portion and the lattice portion.

The first aircraft component may comprise one or more features of the first aircraft component as described above in relation to the aircraft arrangement of the first aspect of the present invention. The first aircraft component may be the first aircraft component described above in relation to the aircraft arrangement of the first aspect of the present invention.

According to a seventh aspect of the invention, there is provided an aircraft comprising at least one, and optionally more than one, aircraft arrangement according to the first aspect of the present invention. The aircraft may be a rotary-wing aircraft or a fixed wing aircraft. The aircraft may be a single aisle or a twin aisle aircraft. The aircraft may be a passenger aircraft, optionally having a seating capacity of at least 50 people, optionally at least 100 people, optionally at least 125 people and optionally at least 150 people. The aircraft may be a freight aircraft. The aircraft may be a twin-engined aircraft or a four-engined aircraft. The aircraft may be an unmanned aerial vehicle.

It will, of course, be appreciated that features described in relation to one aspect of the present invention may be incorporated into other aspects of the present invention. For example, the method of the invention may incorporate any of the features described with reference to the apparatus of the invention and vice versa.

### DESCRIPTION OF THE DRAWINGS

Embodiments of the present invention will now be described by way of example only with reference to the accompanying schematic drawings of which:
Figure 1 shows a perspective view of an aircraft arrangement according to a first embodiment of the invention;
Figure 2 shows a close-up perspective view of the end of the aircraft arrangement of Figure 1, with a wing rib coupled to an energy harvester;
Figure 3 shows a schematic plan view of an aircraft component to be used in an aircraft arrangement according to another embodiment of the invention;
Figure 4 shows a schematic plan view of the aircraft component of Figure 3, showing schematically how input vibrations are transformed into output vibrations suitable for driving an energy harvester;
Figure 5A shows a perspective view of a first unit cell that may be present in an aircraft component according to an embodiment of the invention;
Figure 5B shows a perspective view of a second unit cell that may be present in an aircraft component according to an embodiment of the invention;
Figure 5C shows a perspective view of a third unit cell that may be present in an aircraft component according to an embodiment of the invention;
Figure 6 shows a schematic perspective representation of a cubic unit cell;
Figure 7 shows a schematic representation of a method of generating electrical power according to an embodiment of the invention;
Figure 8 shows a schematic representation of a method of sensing for the presence of a non-standard operating condition in an aircraft according to an embodiment of the invention;
Figure 9 shows a schematic representation of a method of designing an aircraft component for converting at least one input vibration into at least one output vibration for driving an energy harvester according to an embodiment of the invention;
Figure 10 shows a schematic representation of a method of making an aircraft component for converting at least one input vibration into at least one output vibration for driving an energy harvester according to an embodiment of the invention;
Figure 11 shows a schematic representation of a further embodiment of an aircraft arrangement according to an embodiment of the invention; and
Figure 12 shows a schematic representation of an embodiment of an aircraft according to an embodiment of the invention.

### DETAILED DESCRIPTION

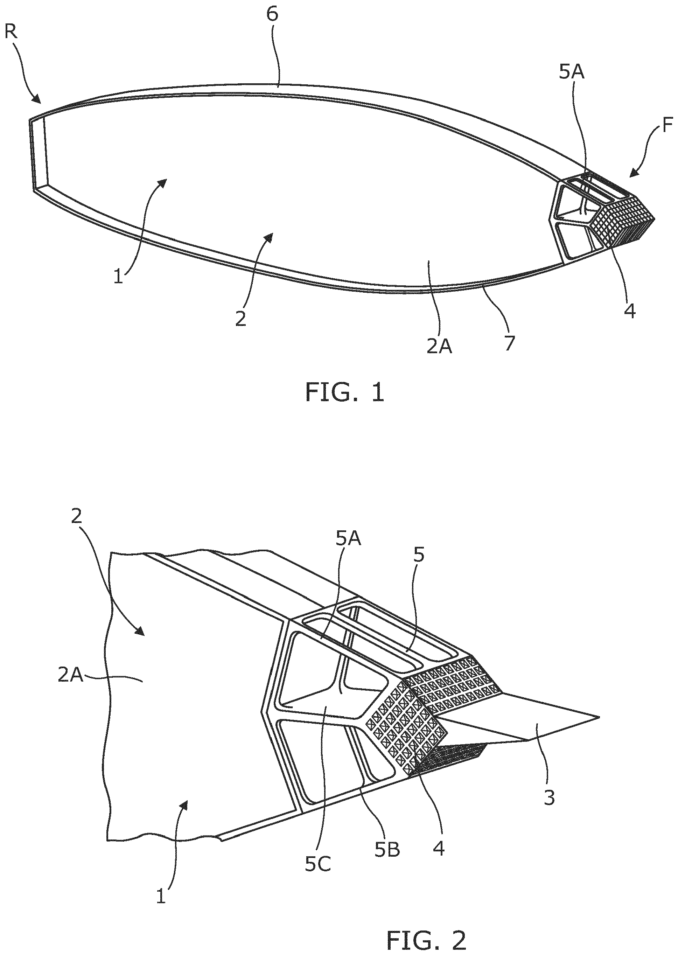

An embodiment of an aircraft arrangement according to a first aspect of the present invention will now be described by way of example only with reference to Figures 1, 2, 5A, 5B, 5C and 6. Referring initially to Figs. 1 and 2, the aircraft arrangement is denoted generally by reference numeral 1. Aircraft arrangement 1 comprises a first aircraft component 2 (in this case, an aircraft rib) for converting at least one input vibration into an output vibration suitable for driving an energy harvester, and an energy harvester 3 coupled to the first aircraft component and configured to generate electrical energy in response to the output vibration of the first aircraft component, the first aircraft component 2 comprising a three-dimensional lattice structure 4 comprising a multiplicity of unit cells, the unit cells comprising multiple lattice-forming members. In the present case, the unit cells are cubic, the sides of the cubes having a length of 4-5mm. The three-dimensional lattice structure 4 in the present case has an overall cuboidal shape, as can be seen in Figs. 1 and 2. The three-dimensional lattice structure 4 is coupled to a main body 2A of aircraft rib 2 via a coupling portion 5. The coupling portion 5 comprises a plurality of legs, two of which are labelled 5A, 5B and a supporting plate portion 5C. The coupling portion 5 ensures that vibrations generated in the main body 2A of rib 2 are transmitted to the three-dimensional lattice structure 4. Rib 2 has a front region F and a rear region R associated with the front and rear of an aircraft wing in which the rib 2 is installed. Rib 2 comprises an upper surface 6 for supporting an upper wing skin of an aircraft wing and a lower surface 7 for supporting a lower wing skin of an aircraft wing. For the avoidance of doubt, various cut-outs and apertures have been omitted from rib 2 for the purpose of clarity.

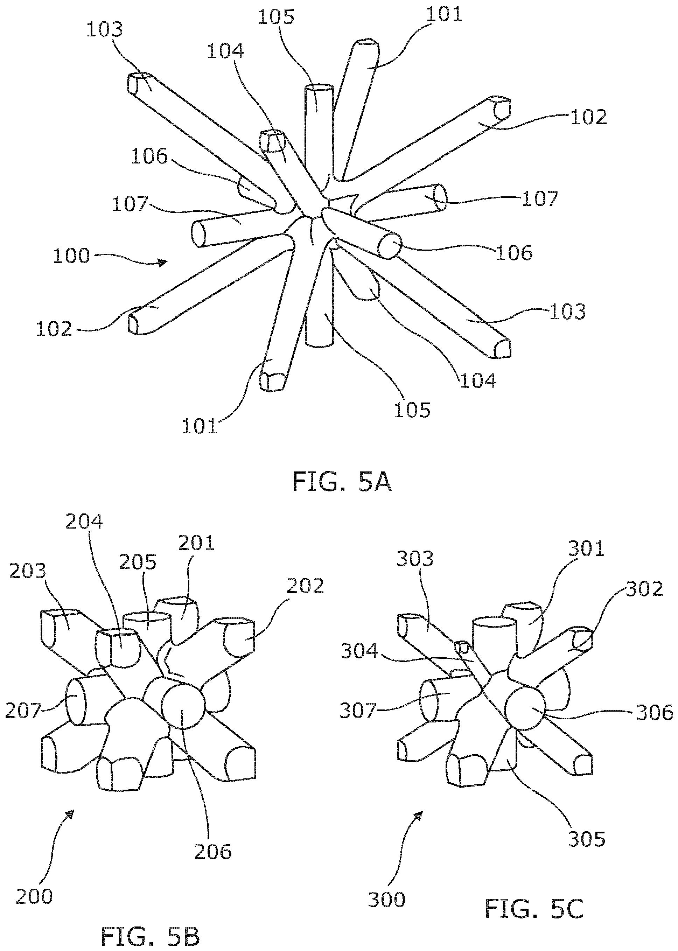

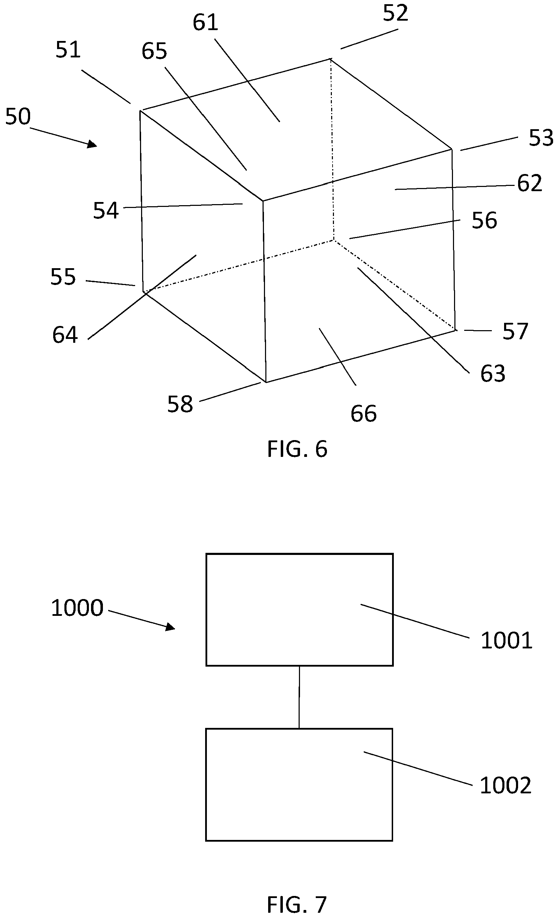

Three-dimensional lattice structure 4 comprises a cuboid of 6x6x9 (number 254) unit cells. Referring to Figures 5A and 6, each unit cell comprises seven lattice-forming members 101-107, the arrangement of which will now be described. First 101 lattice-forming member extends between two corners 52, 58 of the unit cell 100. Second 102 lattice-forming member extends between two corners 53, 55 of the unit cell 100. Third 103 lattice-forming member extends between two corners 51, 57 of the unit cell 100. Fourth 104 lattice-forming member extends between two corners 54, 56 of the unit cell 100. Fifth 105 lattice-forming member extends between two faces 61, 66 of the unit cell 100. Sixth 106 lattice-forming member extends between two faces 63, 65 of the unit cell 100. Seventh 107 lattice-forming member extends between two faces 62, 64 of the unit cell 100. Each of the lattice-forming members 101-107 meets with, and forms a connection with, lattice-forming members in adjacent unit cells, thereby forming the three-dimensional lattice 4. The diameter of each of the lattice-forming members 101-107 is the same for each lattice-forming member 101-107.

Fig. 5B shows another unit cell 200, which has a very similar structure to unit cell 100 depicted in Fig. 5A because unit cell 200 comprises seven lattice-forming members 201-207, each of which has the same orientation as a corresponding lattice-forming member 101-107 in unit cell 100. In this connection, first 201 lattice-forming member extends between two corners 52, 58 of the unit cell 200. Second 202 lattice-forming member extends between two corners 53, 55 of the unit cell 200. Third 203 lattice-forming member extends between two corners 51, 57 of the unit cell 200. Fourth 204 lattice-forming member extends between two corners 54, 56 of the unit cell 200. Fifth 205 lattice-forming member extends between two faces 61, 66 of the unit cell 200. Sixth 206 lattice-forming member extends between two faces 63, 65 of the unit cell 200. Seventh 207 lattice-forming member extends between two faces 62, 64 of the unit cell 200. Unit cell 200 differs from unit cell 100 in that the diameter of the lattice-forming members 201-207 is greater than the diameter of lattice-forming members 101-107 in unit cell 100. This will impart greater mass to the aircraft component in the region in which the unit cell 200 is located. The "fill factor", which is the ratio of the volume of lattice material in the unit cell to the volume of the unit cell for unit cell 200 is 0.8 and for unit cell 100 is about 0.10-0.15. Furthermore, lattice-forming members of greater diameter will provide increased stiffness.

Figs. 5A and 5B show a unit cell in which the diameters of each of the lattice-forming members 101-107 are the same as one another. This need not be the case. For example, Fig. 5C shows a unit cell 300 in which first 301 lattice-forming member extends between two corners 52, 58 of the unit cell 300. Second 2302 lattice-forming member extends between two corners 53, 55 of the unit cell 300. Third 303 lattice-forming member extends between two corners 51, 57 of the unit cell 300. Fourth 304 lattice-forming member extends between two corners 54, 56 of the unit cell 300. Fifth 305 lattice-forming member extends between two faces 61, 66 of the unit cell 300. Sixth 306 lattice-forming member extends between two faces 63, 65 of the unit cell 300. Seventh 307 lattice-forming member extends between two faces 62, 64 of the unit cell 300. First 301, fifth 305, sixth 306 and seventh 307 lattice-forming members have approximately the same, relatively-large diameters as each other. Second 302 and third 303 lattice-forming members have approximately the same diameters as each other, which is about two-thirds of the diameter of the first 301, fifth 305, sixth 306 and seventh 307 lattice-forming members. Fourth 304 lattice-forming member has a diameter that is about a quarter of that of the first 301, fifth 305, sixth 306 and seventh 307 lattice-forming members. The "fill factor" of unit cell 300 is 0.55-0.60.

The use of lattice-forming members of differing size within a unit cell facilitates the manufacture of unit cells with differing mass. Furthermore, the use of unit cells such as 300 with lattice-forming members of differing size provides greater amounts of lattice material in particular directions. This can be used to tune the properties of the three-dimensional lattice structure 4, for example, the vibrational characteristics of an aircraft component in response to an input vibration.

As mentioned above, the lattice-forming members of each unit cell contact, and form a lattice with, lattice-forming members of adjacent unit cells. It is generally preferable for there to be no dramatic differences in diameter between lattice-forming members that contact one another so that the structural integrity of the lattice is not compromised.

In aircraft component 2, the diameters of the lattice-forming members in three-dimensional lattice structure 4 are selected to facilitate transmission of the vibration of the main body 2A of rib 2 to energy harvester 3 so that energy harvester 3 vibrates to produce electrical power. In this connection, energy harvester 3 comprises a piezoelectric component (not shown) that is stimulated by the vibration of the three-dimensional lattice structure. The energy harvester 3 comprises a piezoelectric microelectromechanical (MEMS) device. The use of piezoelectric MEMS devices to harvest vibrational energy is well-known to those skilled in the art. See, for example, Kim, S.G., Priya, S. & Kanno, I. "Piezoelectric MEMS for energy harvesting" MRS Bulletin 37, 1039-1050 (2012) https://doi.org/10.1557/mrs.2012.275; Maria Teresa Todaro, Francesco Guido, Vincenzo Mastronardi, Denis Desmaele, Gianmichele Epifani, Luciana Algieri, Massimo De Vittorio, "Piezoelectric MEMS vibrational energy harvesters: Advances and outlook", Microelectronic Engineering, Volumes 183-184, 2017, Pages 23-36, ISSN 0167-9317, https://doi.org/10.1016/j.mee.2017.10.005; Isaku Kanno, "Piezoelectric MEMS for energy harvesting" 2015 J. Phys.: Conf. Ser. 660 012001; and https://www.americanpiezo.com/blog/piezoelectric-energy-harvesting/

Those skilled in the art will realise that means other than a piezoelectric MEMS device may be used as an energy harvester. In this connection, an electro-magnetic arrangement may be used to convert mechanical kinetic energy into electrical energy, with relative motion of a coil and a magnetic field being used to generate electrical energy from mechanical kinetic energy. Alternatively, an electrostatic arrangement may be used, in which a variable capacitor converts mechanical kinetic energy into electrical energy (see, for example, Shad Roundy, Paul K. Wright, Jan Rabaey, "A study of low level vibrations as a power source for wireless sensor nodes", Computer Communications, Volume 26, Issue 11, 2003, Pages 1131-1144, ISSN 0140-3664, https://doi.org/10.1016/S0140-3664(02)00248-7).

It is discussed above how the vibrational response of the three-dimensional lattice structure may be tuned. Further guidance may be found in Nightingale *et al.*, which describes how it is possible to tune the vibrational response of an aircraft component by varying the diameters of the lattice-forming members within the unit cells that make-up the three-dimensional lattice structure. The teaching of Nightingale *et al.* is imported into the present application.

Three-dimensional lattice structure 4 is made by additive manufacturing. In this case, a layer of powdered metal is deposited, and the powdered metal heated in certain places where it is desired to form the lattice structure. Unheated metal powder can then be removed, another layer of powdered metal deposited, and heated in the desired places. In such a manner, it is possible to manufacture the three-dimensional lattice structure. Other types of additive manufacturing may be used, such as 3D printing.

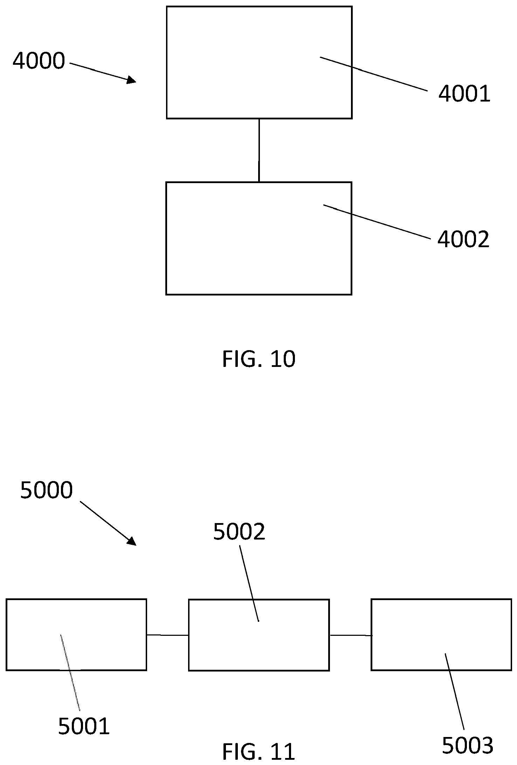

A further embodiment of an aircraft arrangement will now be described by way of example only with reference to Fig. 11. The aircraft arrangement is denoted generally by reference numeral 5000, and comprises a first aircraft component 5001 for converting at least one input vibration into an output vibration suitable for driving an energy harvester, and an energy harvester 5002 coupled to the first aircraft component 5001 and configured to generate electrical energy in response to the output vibration of the first aircraft component. The first aircraft component 5001 comprises a three-dimensional lattice structure 4 comprising a multiplicity of unit cells, the unit cells comprising multiple lattice-forming members. Each unit cell is substantially as described above in relation to Fig. 1, 2, 5A, 5B, 5C and 6. Energy harvester 5002 is configured to provide electrical energy to electrical load 5003. In this case, electrical load 5003 comprises an indicator light (not shown). Electrical load 5003 may be replaced by an electrical energy store, such as a cell or a battery.

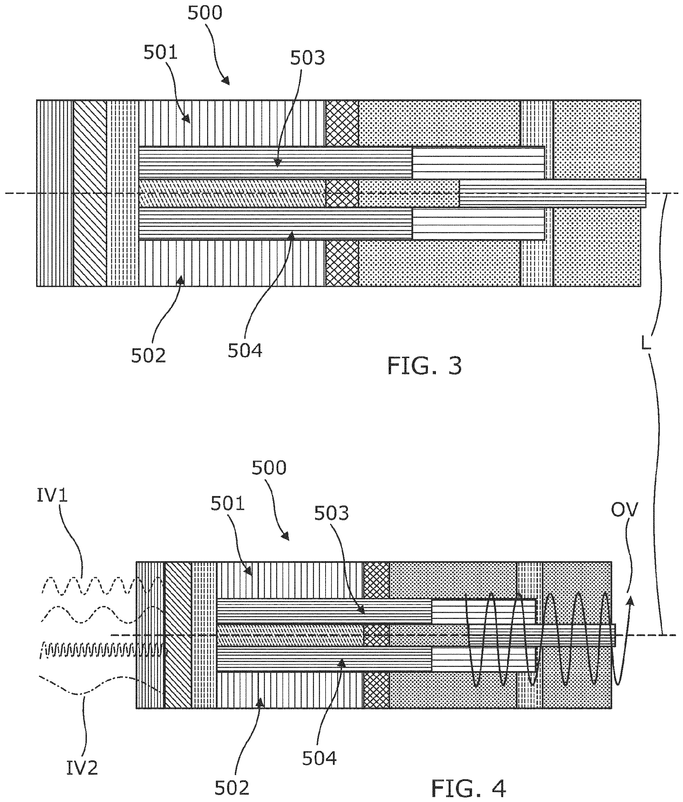

A further embodiment of an aircraft component for use in an aircraft arrangement in accordance with the present invention will now be described by way of example only with reference to Figs. 3 and 4. The aircraft component is denoted generally by reference numeral 500 is a cuboidal shape, and is made from a three-dimensional lattice structure. The three-dimensional lattice structure is substantially as described above in relation to Figs. 5A, 5B, 5C and 6 in so far as the three-dimensional lattice structure comprises a multiplicity of cubic unit cells, each unit cell comprising seven lattice-forming members that form a lattice. The length of the side of the cubic unit cell is 20mm. The aircraft component 500 comprises a plurality of regions of three-dimensional lattice structure, shown by different types of shading, and four of which are labelled 501, 502, 503, 504. Each region is configured to impart certain mechanical and mass characteristics to the aircraft component 500 so that the aircraft component generates an output vibration OV when the aircraft component 500 is subjected to different input vibrations, labelled schematically in Fig. 4 as IV1 and IV2. As can be seen from Figs. 3 and 4, the various regions 501, 502, 503, 504 are symmetrically arranged about a longitudinal axis L of component 500. In this connection, regions 501 and 502 have the same mass and the same lattice structure as one another, and are symmetrically arranged about longitudinal axis L. Within region 501 and within region 502, the diameters of the respective lattice-forming members are not the same from unit cell to unit cell. Likewise, regions 503 and 504 have the same mass and the same lattice structure as one another, and are symmetrically arranged about longitudinal axis L. Within region 503 and within region 504, the diameters of the respective lattice-forming members are not the same from unit cell to unit cell.

An embodiment of a method of generating electrical power in an aircraft in accordance with the third aspect of the present invention will now be described by way of example only with reference to Fig. 7. The method of generating electrical power in an aircraft from a vibration is denoted generally by reference numeral 1000. The method 1000 comprising providing 1001 an aircraft component comprising a three-dimensional lattice structure comprising a multiplicity of unit cells, the unit cells comprising multiple lattice-forming members, the unit cells having a greatest dimension of about 5mm; and causing 1002 vibrations to be generated in the aircraft, thereby causing the aircraft component to vibrate in a pre-determined manner, the pre-determined vibrations driving an energy harvester, the energy harvester generating electrical power. The aircraft component may, for example, be an aircraft rib 2 as described above in relation to Figs. 1 and 2, or the cuboidal aircraft component 500 shown in Figs. 3 and 4. The energy harvester may be the energy harvester 3 described above in relation to Figs. 1 and 2.

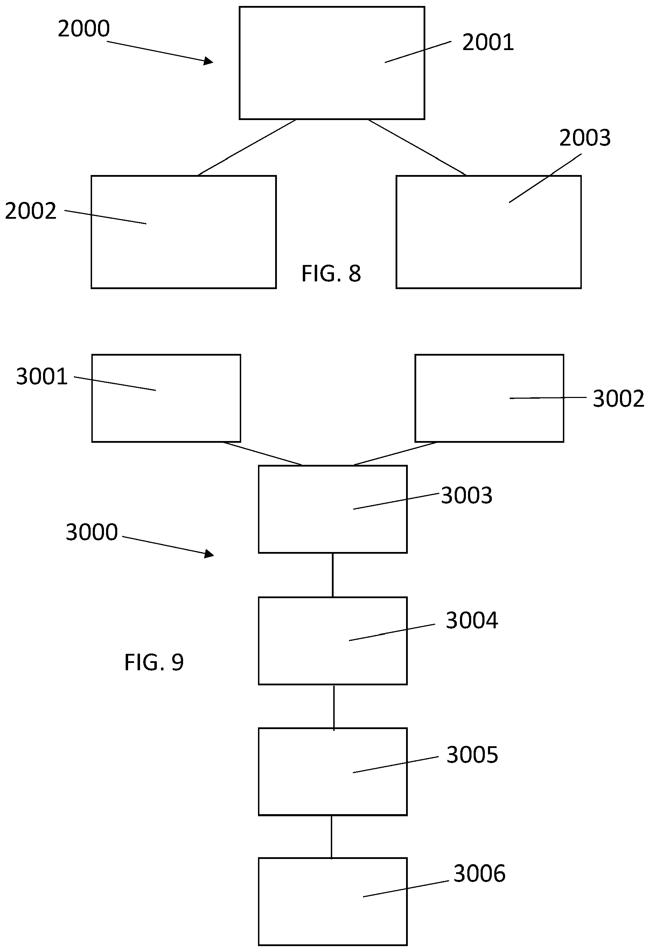

An embodiment of a method of sensing for the presence of a non-standard operating condition in an aircraft will now be described by way of example only with reference to Fig. 8. The method is denoted generally by reference numeral 2000, and comprises providing 2001 a first aircraft component configured to be subjected to indicative vibrations having one or more characteristics, if the indicative vibrations are present, those indicative vibrations being present or absent in the event of the non-standard operating condition. The aircraft component comprises a three-dimensional lattice structure comprising a multiplicity of unit cells, the unit cells comprising multiple lattice-forming members, the unit cells having a greatest dimension of about 5mm. The three-dimensional lattice structure is substantially the same as that described above in relation to Figs. 5A, 5B, 5C and 6. The aircraft component may be any suitable aircraft component. The aircraft component is configured so that it is subject to indicative vibrations, if those indicative vibrations are present. In the presence of indicative vibrations, the first aircraft component vibrates 2002 in a first pre-determined manner in accordance with one or more vibrational characteristics, causing an energy harvester to generate electrical energy in a first electrical energy-generating mode. The first electrical energy-generating mode can be indicative of the presence or absence of the non-standard operating condition. For example, if the aircraft component is configured to be subject to indicative vibrations that result from the normal operation of an aircraft engine, then the generation of electrical energy in a first electrical energy-generating mode is indicative of a standard operating condition of the aircraft. Conversely, if the aircraft component is configured to be subject to indicative vibrations that result from a mass imbalance in the aircraft, then the generation of electrical energy in a first electrical energy-generating mode is indicative of a non-standard operating condition of the aircraft.

The electrical energy generated by the energy harvester may be used to power an indicator (such as a visual indicator). In the case of the normal operation of the aircraft engine, the visual indicator would indicate normal operation of the aircraft. In the case of a non-standard operating condition, such as mass imbalance, the visual indicator would indicate abnormal operation of the aircraft.

As mentioned above, the presence of indicative vibrations can be associated with standard and non-standard operating conditions of an aircraft. Similarly, the absence of indicative vibrations can also be associated with standard and non-standard operating conditions of an aircraft. In the absence of indicative vibrations, the first aircraft component either does not vibrate 2003 or vibrates 2003 differently from the first pre-determined manner, causing an energy harvester to either not vibrate or to generate electrical energy in a second electrical energy generating mode that is indicative of the presence or absence of the non-standard operating condition. For example, in the case mentioned above in which the component is configured to be subject to indicative vibrations that result from the normal operation of an aircraft engine, then the absence of indicative vibrations would be indicative of a non-standard operating condition of the aircraft. Conversely, if the aircraft component is configured to be subject to indicative vibrations that result from a mass imbalance in the aircraft, then the absence of indicative vibrations is indicative of a standard, normal operating condition of the aircraft.

An embodiment of a method of designing an aircraft component in accordance with the present invention will now be described with reference to Fig. 9. The method, designated generally by reference numeral 3000, is for designing an aircraft component for converting at least one input vibration into an output vibration for driving an energy harvester, the aircraft component comprising a three-dimensional lattice structure comprising a multiplicity of unit cells, the unit cells comprising multiple lattice-forming members. In the present case, the unit cells have a greatest dimension of about 5mm. The method 3000 comprises determining 3001 one or more desired output vibrational characteristics of the aircraft component for driving the energy harvester. This may comprise selecting a desired frequency and/or desired minimum amplitude of vibration of the aircraft component (or at least part of the aircraft component, such as an end portion of the aircraft component). The method 3000 also comprises determining 3002 one or more input vibrational characteristics of the aircraft component. This may comprise determining the frequency and/or amplitude of vibrations to which the component is likely to be subjected. The aircraft component then has to be designed, based on the desired output vibration characteristics and the known likely input vibration characteristics. In this connection, method 3000 comprises defining 3003 the structure of the aircraft component based on the one or more desired output vibrational characteristics and the one or more input vibrational characteristics, in relation to one of more of: the number of unit cells, the size of the unit cells, the number of lattice-forming members within unit cells, the size of lattice-forming members within unit cells, the arrangement of lattice-forming members within unit cells, and the distribution of the unit cells within the aircraft component. In this connection, in the present example, the size of the unit cells is the same for all unit cells and the shape of the unit cell is the same for all unit cells (5mm cube). Furthermore, the number of lattice-forming members in each unit cell is the same (seven), and the arrangement of those lattice-forming members in each unit cell is the same for all cells. However, as described above in relation to Figs. 1, 2, 3 and 4, unit cells in different parts of the aircraft component may have different "fill factors", with regions of three-dimensional lattice structure having particular masses and/or stiffnesses. Therefore, an initial three-dimensional lattice structure will be chosen.

Based on this initial three-dimensional lattice structure, one or more output vibrational characteristics will be determined 3004 based on the one or more input vibrational characteristics for the defined structure of the aircraft component. The method 3000 then comprises comparing 3005 the one or more output vibrational characteristics with the one or more desired output vibrational characteristics. The size of lattice-forming members within unit cells, and the distribution of the unit cells within the aircraft component is then altered 3006 depending on the comparison between the one or more output vibrational characteristics with the one or more desired output vibrational characteristics.

The discussion above in relation to Figs. 1, 2, 3 and 4 provides insight as to how the structure of the three-dimensional lattice structure has a bearing on the vibrational behaviour of the aircraft component. Further guidance may be gained from Nightingale *et al.*

An embodiment of a method of making an aircraft component for converting at least one input vibration into an output vibration for driving an energy harvester in accordance with the present invention will now be described by way of example only with reference to Fig. 10. The method is denoted generally by reference numeral 4000. The aircraft component comprises a three-dimensional lattice structure comprising a multiplicity of unit cells, the unit cells comprising multiple lattice-forming members, the unit cells having a greatest dimension of about 5mm. The method 4000 comprising a method 4001 of designing an aircraft component as described above with reference to Fig. 9. The method 4000 comprises producing 4002 an aircraft component to the design generated by the method 4001 of designing an aircraft component. Typically, the production of the aircraft component comprises using additive manufacturing to make the three-dimensional lattice-structure. Any suitable additive manufacturing technique may be used. For example, suitable plastics materials may be deposited sequentially to provide the three-dimensional lattice structure. Alternatively, a technique that involves the deposition and sintering of metal powders may be used, such techniques being well-known to those skilled in the art.

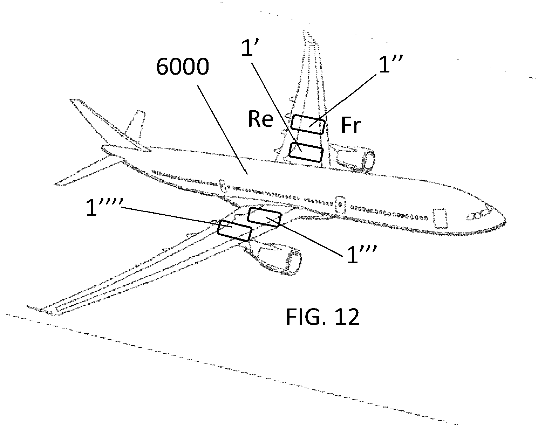

An embodiment of an aircraft according to an aspect of the present invention will now be described by way of example only with reference to Fig. 12. The aircraft is denoted generally by reference numeral 6000 and comprises a plurality of aircraft arrangements 1', 1", 1‴ and 1ʺʺ, each comprising a first aircraft component (in this case, an aircraft rib) for converting at least one input vibration into an output vibration suitable for driving an energy harvester, and an energy harvester coupled to the first aircraft component and configured to generate electrical energy in response to the output vibration of the first aircraft component, the first aircraft component comprising a three-dimensional lattice structure comprising a multiplicity of unit cells, the unit cells comprising multiple lattice-forming members. In the present case, the unit cells are cubic, the sides of the cubes having a length of 5mm. Each aircraft arrangement 1', 1", 1"', 1ʺʺ is essentially the same as aircraft arrangement 1 described above in relation to Figs. 1, 2, 5A, 5B, 5C and 6. Referring to Figs. 1 and 2, each of the aircraft components 1', 1", 1‴, 1ʺʺ extends from a front (Fr) part of an aircraft wing to a rear part (Re) of the aircraft wing, with the front region F of the aircraft component associated with the front Fr part of the aircraft wing and the rear region R of the aircraft component associated with the rear Re part of the aircraft wing.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

The examples above describe a lattice structure with a cubic unit cell. Those skilled in the art will realise that other shape unit cells may be used, for example, tetragonal, orthorhombic, monoclinic, hexagonal, rhombohedral and triclinic.

The examples above describe a lattice structure comprised of cubic unit cells. Those skilled in the art will realise that other unit cell structures/shapes are possible.

The examples above describe a unit cell comprising seven lattice members, four extending between the corners of the cubic cell and three extending across the faces of the unit cell. Those skilled in the art will realise that other arrangements are possible.

The examples above describe an aircraft component in which each unit cell has the same shape, same size and the same number of lattice-forming members, with each respective lattice-forming member having the same orientation in each unit cell. Those skilled in the art will realise that this need not be the case.

The examples above show the use of a three-dimensional lattice structure in an aircraft rib. Those skilled in the art will realise that it would be possible to use the three-dimensional lattice structure in other aircraft components.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. An aircraft arrangement comprising a first aircraft component for converting at least one input vibration into an output vibration suitable for driving an energy harvester, and an energy harvester coupled to the first aircraft component and configured to generate electrical energy in response to the output vibration of the first aircraft component, the first aircraft component comprising a three-dimensional lattice structure comprising a multiplicity of unit cells, the unit cells comprising at least one (and optionally multiple) lattice-forming member, the unit cells having a mean greatest dimension of at least 10nm.

2. The aircraft arrangement according to claim 1, the unit cells having a mean greatest dimension of no more than 200mm, and optionally having a mean greatest dimension of at least 1.0mm.

3. The aircraft arrangement according to claim 1 or claim 2, in which the first aircraft component comprises one or more lattice structure portions formed from said unit cells, and one or more non-lattice portions, said non-lattice portions not being formed from said unit cells.

4. The aircraft arrangement according to any preceding claim, in which a first lattice-forming member extends between a first pair of faces of a unit cell, a second lattice-forming member extends between a second pair of faces of the unit cell, a third lattice-forming member extends between a first pair of corners of the unit cell and a fourth lattice-forming member extends between a second pair of corners of the unit cell, optionally wherein each face and/or each corner of a unit cell may be provided with lattice-forming member.

5. The aircraft arrangement according to any preceding claim, wherein at least 30% of the unit cells have a fill factor, defined as the ratio of the volume of the lattice-forming members to the volume of the unit cell of at least 0.10, and optionally wherein at least 30% of the unit cells have a fill factor, defined as the ratio of the volume of the lattice-forming members to the volume of the unit cell of no more than 0.60.

6. The aircraft arrangement according to any preceding claim, comprising a second aircraft component being capable of generating the at least one input vibration, and being coupled to the first aircraft component so that vibration of the second aircraft component generates the at least one input vibration in the first aircraft component.

7. The aircraft arrangement according to any preceding claim, wherein the energy harvester is electrically coupled to an electrical load, and configured to provide electrical energy to said electrical load, or the energy harvester is arranged to provide electrical energy to a store of electrical energy.

8. The aircraft arrangement according to any preceding claim, wherein the at least one input vibration is present or absent in the event of a non-standard operating condition, and the aircraft arrangement is configured to indicate the presence or absence of a non-standard operating condition in the aircraft, and optionally wherein the absence of the at least one input vibration is indicative of a non-standard operating condition, or the presence of the at least one input vibration is indicative of a non-standard operating condition.

9. A first aircraft component suitable for use in the aircraft arrangement of any preceding claim.

10. An aircraft comprising at least one, and optionally more than one, aircraft arrangement according to any of claims 1 to 8.

11. A method of generating electrical power in an aircraft from a vibration, the method comprising:
providing an aircraft component as defined in any of claims 1 to 8;
causing vibrations to be generated in the aircraft, thereby causing the aircraft component to vibrate in a pre-determined manner, the pre-determined vibrations driving an energy harvester, the energy harvester generating electrical power.

12. A method of sensing for the presence of a non-standard operating condition in an aircraft, the method comprising:
providing an aircraft component configured to be subjected to indicative vibrations having one or more characteristics, if the indicative vibrations are present, those indicative vibrations being present or absent in the event of the non-standard operating condition, the aircraft component being as defined in claims 1 to 8;
in the presence of indicative vibrations, the aircraft component vibrates in a first pre-determined manner in accordance with one or more vibrational characteristics, causing an energy harvester to generate electrical energy in a first electrical energy generating mode that is indicative of the presence or absence of the non-standard operating condition; and
in the absence of indicative vibrations, the aircraft component either does not vibrate or vibrates differently from the first pre-determined manner, causing an energy harvester to either not vibrate or to generate electrical energy in a second electrical energy generating mode that is indicative of the presence or absence of the non-standard operating condition.

13. A method of designing a first aircraft component for converting at least one input vibration into an output vibration for driving an energy harvester, the first aircraft component being defined as in any of claims 1 to 8, the method comprising:
determining one or more desired output vibrational characteristics of the first aircraft component for driving the energy harvester;
determining one or more input vibrational characteristics of the first aircraft component;
based on the one or more desired output vibrational characteristics and the one or more input vibrational characteristics, defining the structure of the first aircraft component in relation to one of more of: the number of unit cells, the size of the unit cells, the number of lattice-forming members within unit cells, the size of lattice-forming members within unit cells, the arrangement of lattice-forming members within unit cells, and the distribution of the unit cells within the first aircraft component;
determining one or more output vibrational characteristics based on the one or more input vibrational characteristics for the defined structure of the first aircraft component, and comparing the one or more output vibrational characteristics with the one or more desired output vibrational characteristics; and
based on said comparison, altering one or more of the number of unit cells, the size of the unit cells, the number of lattice-forming members within unit cells, the size of lattice-forming members within unit cells, the arrangement of lattice-forming members within unit cells, and the distribution of the unit cells within the first aircraft component.

14. A method of making a first aircraft component for converting at least one input vibration into an output vibration for driving an energy harvester, the first aircraft component being as defined in any of claims 1 to 8, the method of producing a first aircraft component comprising a method of designing a first aircraft component in accordance with claim 13, and producing a first aircraft component to the design generated by the method of designing a first aircraft component in accordance with claim 13.

15. The method of claim 14, wherein the three-dimensional lattice structure is produced by additive manufacturing.
